# EUROPÄISCHE PATENTSCHRIFT

(11) **EP 1 265 124 B1**
(45) Veröffentlichungstag und Bekanntmachung des Hinweises auf die Patenterteilung: **19.05.2004**
(21) Anmeldenummer: 02100573.1
(22) Anmeldetag: 29.05.2002
(51) Int. Cl.: G06F 1/14, H04J 3/06, H04L 29/06

(54) **Verfahren zum Übermitteln von Zeitinformation über ein Datenpaketnetz**
Method for transmitting time information in a packet data network
Procédé pour transmettre des informations temporelles sur un reseau de données par paquets

(30) Priorität: 07.06.2001 DE 10127738
(43) Veröffentlichungstag der Anmeldung: 11.12.2002
(73) Patentinhaber: SIEMENS AKTIENGESELLSCHAFT, 80333 München (DE)
(72) Erfinder: Zwack, Eduard, 82178 Puchheim (DE)

(56) Entgegenhaltungen:
- EP-A- 0 247 026
- EP-A- 0 722 233
- WO-A-00/28400

## Beschreibung

Zeitgemäße Kommunikationseinrichtungen und Datenverarbeitungseinrichtungen werden im zunehmenden Maße durch Datenpaketnetze, wie zum Beispiel lokale Netze (LAN: Local Area Network), ATM-Netze (ATM: Asynchronous Transfer Mode), das Internet oder andere auf dem Internetprotokoll (IP) basierende Datennetzwerke vernetzt. Für viele Kommunikations- oder Datenverarbeitungsanwendungen wird die aktuelle Uhrzeit oder ein anderes genaues Zeitmaß benötigt. Zu diesem Zweck sind in den meisten Kommunikations- oder Datenverarbeitungseinrichtungen Echtzeituhren (RTC: Real Time Clock) oder quarzgesteuerte Zeittaktgeber vorgesehen.

In einem vernetzten System sind die Echtzeituhren der vernetzten Kommunikations- oder Datenverarbeitungseinrichtungen zu synchronisieren, um netzwerkweit ein einheitliches Zeitmaß bereitzustellen. Die jeweils erforderliche Synchronisationsgenauigkeit hängt hierbei im wesentlichen von der Art von über das Netzwerk verteilten Anwendungen ab. Während reine Datenverarbeitungsanwendungen in der Regel geringere Synchronitätsanforderungen stellen, ist bei Echtzeitkommunikationsanwendungen im Allgemeinen eine hohe Synchronisationsgenauigkeit erforderlich. Eine hohe Zeittaktsynchronität ist insbesondere bei verbindungsorientierten, eigentlich synchronen Kommunikationstechnologien erforderlich, die gegenwärtig in zunehmenden Maße auf asynchrone Datenpaketnetze portiert werden.

Eine Synchronisierung mehrerer Echtzeituhren oder Zeittaktgebern eines Netzwerkes erfordert eine möglichst genaue Zeitinformationsübermittlung zwischen den zu synchronisierenden Netzwerkeinrichtungen.

Bisher wird zur Synchronisierung von Netzwerkeinrichtungen in Datenpaketnetzen häufig das sogenannte NTP-Protokoll (Network Time Protocol) eingesetzt. Das NTP-Protokoll ist beispielsweise in dem Dokument "Request For Comments 1305: Network Time Protocol (Version 3), Specification, Implementation and Analysis", von David L. Mills, datiert vom März 1992 beschrieben. Im Rahmen des NTP-Protokolls werden von einer Zeitinformationsquelle stammende Zeitinformationen innerhalb von Datenpaketen über das Datenpaketnetz übermittelt. Durch wiederholte Übermittlung von Zeitinformationen in vorgegebenen Zeitabständen und gegebenenfalls in unterschiedlichen Richtungen, kann der durch Übermittlungsverzögerungen bedingte Synchronisationsfehler verringert werden. Die Synchronisationsgenauigkeit des NTP-Protokolls wird jedoch durch die in internetprotokollbasierten Netzwerken unvermeidlichen Laufzeitschwankungen und Schwankungen der Paketverarbeitungszeiten in Netzwerkeinrichtungen, wie zum Beispiel Routern oder Vermittlungsknoten, beschränkt. Derartige Schwankungen liegen typischerweise im Bereich von 1 bis 100 Millisekunden. Mittels des NTP-Protokolls läßt sich damit im günstigen Fall nur eine Synchronisationsgenauigkeit von zirka 1 Millisekunde erzielen. Diese Genauigkeit ist jedoch für viele zeitgemäße Netzwerkanwendungen nicht ausreichend.

Eine weitere Möglichkeit Ungenauigkeiten im Hinblick auf einen Sende- und/oder Weiterverarbeitungszeitpunkt der Uhrzeit weitgehend zu vermeiden ist in Dokument WO 00/28400 dargestellt.

Es ist Aufgabe der vorliegenden Erfindung ein Verfahren zum Übermitteln von Zeitinformation über ein Datenpaketnetz anzugeben, mit dem sich eine höhere Synchronisationsgenauigkeit erzielen läßt.

Gelöst wird diese Aufgabe durch ein Verfahren mit den Merkmalen des Patentanspruchs 1.

Beim erfindungsgemäßen Verfahren wird von einer Zeitinformationsquelle eine Zeitinformation abgerufen, die innerhalb eines Datenpaketes über ein Datenpaketnetz, wie zum Beispiel ein lokales Netz (LAN) oder ein Weitverkehrsnetz (WAN: Wide Area Network), wie zum Beispiel das Internet, übermittelt wird. Die abgerufene Zeitinformation wird zu diesem Zweck zu einem Datenpaket-Sendebaustein, zum Beispiel eine Netzwerkkarte, übertragen, durch den ein Sendezeitpunkt des Datenpaketes kontrolliert wird. Erfindungsgemäß werden hierbei der Sendezeitpunkt und der Abruf der Zeitinformation durch ein von der Zeitinformationsquelle oder dem Datenpaket-Sendebaustein generiertes, den Sendezeitpunkt angebendes Sendesignal zeitlich aneinander ausgerichtet.

Durch die aktive zeitliche Ausrichtung des genauen Sendezeitpunktes mit dem Abruf der Zeitinformation werden die ansonsten auftretenden Schwankungen der Zeitspanne zwischen Abruf der Zeitinformation und dem tatsächlichen Senden des die Zeitinformation beinhaltenden Datenpaketes vermieden. Beim Stand der Technik werden derartige Schwankungen durch Programmunterbrechungen (Interrupts) und Wartezeiten bedingt, die in unvorhersehbarer Weise zwischen Abruf der Zeitinformation und dem tatsächlichen Senden des Datenpaketes auftreten.

Beim bekannten NTP-Protokoll, das keine unmittelbare Kontrolle über den genauen Sendezeitpunkt eines Datenpaketes hat, liegen die Zeitschwankungen im Bereich von 1 Millisekunde und begrenzen somit die erzielbare Synchronisations-genauigkeit. Beim erfindungsgemäßen Verfahren können dagegen Schwankungen der Zeitspanne zwischen Abruf der Zeitinformation und tatsächlichem Senden des Datenpaketes weitgehend vermieden werden und somit eine höhere Synchronisationsgenauigkeit erzielt werden.

Vorteilhafte Ausführungsformen und Weiterbildungen der Erfindung sind in den abhängigen Ansprüchen angegeben.

Nach einer Ausführungsform der Erfindung kann das Sendesignal durch den Datenpaket-Sendebaustein im Rahmen des Sendevorgangs, zum Beispiel mit Beginn des Sendens des Datenpakets, generiert werden. Der Sendezeitpunkt des Datenpaketes wird damit durch das Sendesignal, und zwar durch dessen Generierungszeitpunkt angegeben. Durch das generierte Sendesignal kann der Abruf der Zeitinformation von der Zeitinformationsquelle ausgelöst werden. Auf diese Weise kann in das zu übermittelnde Datenpaket die jeweils zum Sendezeitpunkt genauest mögliche Zeitinformation eingefügt werden.

Nach einer weiteren Ausführungsform der Erfindung kann das Sendesignal durch die Zeitinformationsquelle generiert werden. Das Sendesignal wird hierbei zu einem vorgegebenen Zeitpunkt generiert und löst das Senden des Datenpakets aus. In das zu übermittelnde Datenpaket kann hierbei schon vorab eine dem vorgegebenen Zeitpunkt entsprechende Zeitinformation eingefügt werden. Das Einfügen der Zeitinformation muß damit nicht zum tatsächlichen Sendezeitpunkt des Datenpaketes erfolgen.

Die Übermittlung des Datenpakets über das Datenpaketnetz kann vorzugsweise gemäß einem Übertragungsprotokoll der TCP/IP-Protokollfamilie erfolgen.

Gemäß einer vorteilhaften Weiterbildung der Erfindung kann auch bei einem Empfang eines über das Datenpaketnetz übermittelten Datenpaketes ein möglichst genauer Empfangszeitpunkt des Datenpaketes erfaßt werden. Zu diesem Zweck kann durch einen Datenpaket-Empfangsbaustein ein Empfangssignal generiert werden, durch das ein Abruf einer Empfangszeitinformation von einer weiteren Zeitinformationsquelle, zum Beispiel einer Echtzeituhr eines jeweiligen Empfängers eines Datenpaketes, veranlasst wird. Somit können sich Schwankungen der Zeitspanne zwischen dem tatsächlichen Empfang des Datenpaketes und der Auswertung der darin enthaltenden Zeitinformation nicht negativ auf die Synchronisationsgenauigkeit auswirken.

Aus der Empfangszeitinformation und der im Datenpaket übermittelten Zeitinformation kann eine relative Abweichung der in Sender und Empfänger des Datenpakets enthaltenen Zeitinformationsquellen ermittelt werden. Zur Erhöhung der Genauigkeit kann die Laufzeit des Datenpaketes bei der Bestimmung der Abweichung berücksichtigt werden. Zur Bestimmung der Laufzeit kann beispielsweise vom Empfänger des Datenpakets ein weiteres Datenpaket mit einer weiteren Zeitinformation nach dem erfindungsgemäßen Verfahren zum ursprünglichen Sender zurück übermittelt werden. Dort kann anhand der im weiteren Datenpaket übermittelten Zeitinformation die Verarbeitungsverzögerung im Empfänger ermittelt werden und so ein Wert für die Summe der reinen Laufzeiten in beiden Richtungen berechnet werden. Bei einer direkten Verbindung von Sender und Empfänger, z.B. durch ein Ethernetkabel, sind die reinen Kabellaufzeiten in der Regel sehr kurz und Laufzeitschwankungen praktisch vernachlässigbar.

Sofern die reinen Laufzeiten zwischen Sender und Empfänger weitgehend konstant sind, kann auf die oben beschriebene Weise eine sehr hohe Synchronisationsgenauigkeit erzielt werden. Häufig befinden sich jedoch zwischen Sender und Empfänger ein oder mehrere Netzknoten des Datenpaketnetzes, wie zum Beispiel Router-Einrichtungen oder Vermittlungsknoten, die zu übermittelnde Datenpakete jeweils erst nach einer kurzen Verarbeitungszeit weiterleiten. Diese Verarbeitungszeiten sind jedoch aufgrund von Programmunterbrechungen und Wartezeiten von in den Netzknoten ablaufenden Steuerprogrammen meist unregelmäßigen Schwankungen unterworfen. Diese Schwankungen haben wesentlichen Anteil an den Laufzeitschwankungen der über das Datenpaketnetz übermittelten Datenpakete.

Durch eine vorteilhafte Weiterbildung der Erfindung kann vermieden werden, daß sich die in den Netzknoten auftretenden Verarbeitungszeitschwankungen negativ auf die Synchronisationsgenauigkeit auswirken. Nach dieser Weiterbildung wird auch in einem das Datenpaket weiterleitenden Netzknoten bei Empfang des Datenpaketes ein Empfangssignal generiert, durch das ein Abruf einer einen Empfangszeitpunkt angebenden Empfangszeitinformation von einer Zeitinformationsquelle des Netzknotens veranlasst wird. Diese Empfangszeitinformation wird zusammen mit einer einen Weitersendezeitpunkt angebenden Sendezeitinformation mit dem Datenpaket weitergeleitet. Aus der Differenz zwischen Sendezeitinformation und Empfangszeitinformation ist die Verweildauer des Datenpaketes im Netzknoten berechenbar. Anhand der mit dem Datenpaket zusätzlich weitergeleiteten Zeitinformationen kann ein weiterer Empfänger des Datenpakets die Verweildauer des Datenpaketes im Netzknoten und damit auch die Schwankungen dieser Verweildauer bei der Berechnung der relativen Abweichung der beteiligten Zeitinformationsquellen eliminieren. Um eine möglichst hohe Synchronisationsgenauigkeit zu erzielen, sollten möglichst alle auf dem Leitweg zwischen den zu synchronisierenden Zeitinformationsquellen befindlichen Netzknoten den jeweiligen Empfangs- sowie Sendezeitpunkt auf die beschriebene Weise registrieren und in Form einer zusätzlichen Zeitinformation mit dem Datenpaket weiterleiten.

Nach einer vorteilhaften Ausführungsform der Erfindung kann das Sendesignal und/oder das Empfangssignal durch Hardwarekomponenten generiert und/oder ausgewertet werden.

Weiterhin kann das Sendesignal und/oder das Empfangssignal auf der physikalischen Schicht, das heißt Schicht 1, des OSI-Referenz-Models generiert und/oder ausgewertet werden. Auf diese Weise können der Sende- bzw. Empfangszeitpunkt und der Abruf der Zeitinformationen physikalisch taktgenau oder mit konstanter physikalisch taktgenauer Verzögerung aneinander ausgerichtet werden.

Ein Ausführungsbeispiel der Erfindung wird nachfolgend anhand der Zeichnung näher erläutert.

Dabei zeigen jeweils in schematischer Darstellung:
Fig 1 über ein Datenpaketnetz zu synchronisierende Kommunikationseinrichtungen und
Fig 2 ein Zeitablaufdiagramm einer Messung der relativen Drift von Echtzeituhren der zu synchronisierenden Kommunikationseinrichtungen.

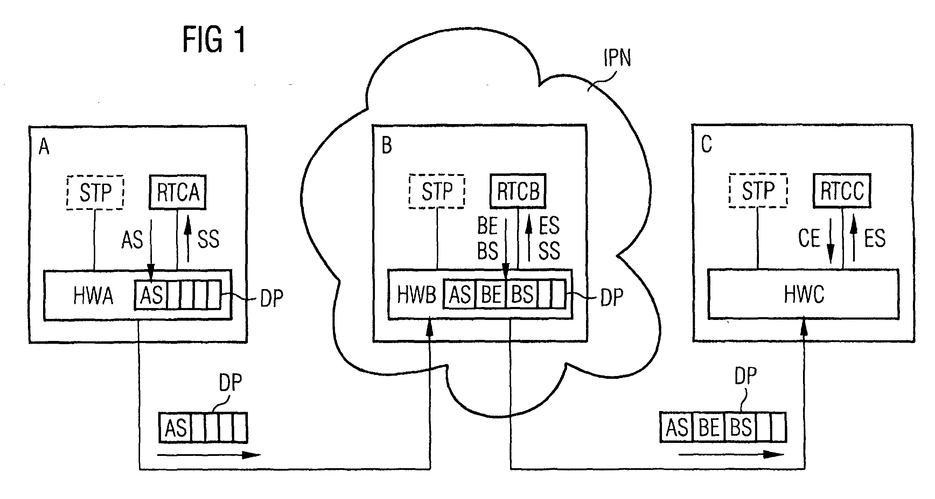

In Fig 1 sind zwei zu synchronisierende Kommunikationseinrichtungen A und C schematisch dargestellt, die an ein asynchrones Datenpaketnetz IPN gekoppelt sind. Für das vorliegende Ausführungsbeispiel sei angenommen, daß die Datenübertragung im Datenpaketnetz IPN auf dem sogenannten Internetprotokoll (IP) basiert. Das Datenpaketnetz IPN kann beispielsweise durch ein sogenanntes lokales Netz (LAN) oder ein Weitverkehrsnetz (WAN) wie das Internet realisiert sein. Die zu synchronisierenden Kommunikationseinrichtungen A und C können zum Beispiel Endgeräte oder Server zur Sprach-, Video- und/oder Datenkommunikation oder Netzwerkeinrichtungen weiterer Kommunikationsnetze sein.

Innerhalb des Datenpaketnetzes IPN befindet sich ein Netzknoten B, über den Datenpakete zwischen den Kommunikationseinrichtungen A und C ausgetauscht werden. Der Netzknoten B kann beispielsweise eine Routereinrichtung, eine Vermittlungseinrichtung, eine Gatewayeinrichtung oder eine sog. Netzwerkbrücke sein. Aus Gründen der Einfachheit sei für das vorliegende Ausführungsbeispiel angenommen, daß sich auf dem Leitweg zwischen den Kommunikationseinrichtungen A und C nur ein solcher Netzknoten befindet. Die nachfolgenden Ausführungen lassen sich jedoch sinngemäß auch auf den Fall anwenden, daß sich mehrere Netzknoten auf dem Leitweg zwischen den Kommunikationseinrichtungen A und C befinden.

Die Kommunikationseinrichtungen A und C sowie der Netzknoten B weisen jeweils eine Echtzeituhr RTCA, RTCC beziehungsweise RTCB als Zeitinformationsquelle auf. Die Echtzeituhren RTCA, RTCB und RTCC werden jeweils unabhängig voneinander durch Quarzoszillatoren (nicht dargestellt) getaktet. Die Kommunikationseinrichtungen A und C sowie der Netzknoten B verfügen weiterhin jeweils über einen Sende/Empfangsbaustein HWA, HWC beziehungsweise HWB zum Senden und Empfangen von Datenpaketen. Die Sende/Emfangsbausteine HWA, HWB und HWC sind jeweils als Hardwarebaugruppen ausgestaltet, die eine unmittelbare Kontrolle bzw. Erfassung des genauen Sende- beziehungsweise Empfangzeitpunktes eines Datenpaketes auf der physikalischen Schicht des OSI-Referenzmodells erlauben. Die Kommunikationseinrichtungen A und C sind über ihre Sende/Empfangsbausteine HWA beziehungsweise HWC jeweils an das Datenpaketnetz IPN und damit an den Sende/Empfangsbaustein HWB des Netzknotens B gekoppelt. Zur Kontrolle oder Erfassung eines genauen Sendebeziehungsweise Empfangszeitpunktes sind die Sende/Empfangsbausteine HWA, HWB und HWC jeweils mit den Echtzeituhren RTCA, RTCB beziehungsweise RTCC gekoppelt.

Zur Synchronisation der Echtzeituhren ist in den Kommunikationseinrichtungen A und C sowie in dem Netzknoten B jeweils ein Synchronisationsprotokoll STP mit Zugriff auf den jeweiligen Sende/Empfangsbaustein HWA, HWC bzw. HWB implementiert.

Im vorliegenden Ausführungsbeispiel soll die Echtzeituhr RTCA der Kommunikationseinrichtung A über das Datenpaketnetz IPN mit der Echtzeituhr RTCC der Kommunikationseinrichtung C synchronisiert werden. Zu diesem Zweck wird von der Kommunikationseinrichtung A ein Datenpaket DP mit einer Sendezeitinformation AS, die den genauen Sendezeitpunkt des Datenpaketes DP angibt, über das Datenpaketnetz IPN zur Kommunikationseinrichtung C übermittelt.

Zur Übermittlung des Datenpaketes DP wird dieses zunächst in ein Senderegister des Sende/Emfangsbausteins HWA geladen. Die Sendezeitinformation AS ist dabei noch nicht in das Datenpaket DP eingefügt. Mit dem Beginn des Sendens des Datenpakets DP wird vom Sende/Empfangsbaustein HWA ein den Sendebeginn anzeigendes Sendesignal SS generiert und zur Echtzeituhr RTCA übertragen. Das Sendesignal SS kann hierbei z.B. durch ein den Sendezeitpunkt angebendes Zeitinformationselement oder durch einen Impuls, der den Sendezeitpunkt durch den Generierungszeitpunkt des Impulses anzeigt, realisiert sein. Durch das Sendesignal SS wird die Echtzeituhr RTCA dazu veranlaßt, den aktuellen Inhalt ihres Zeitregisters zum Sende/Empfangsbaustein HWA zu übertragen, wo dieser aktuelle Inhalt als Sendezeitinformation AS physikalisch taktgenau in das Datenpaket DP eingefügt wird. Damit wird das Datenpaket DP mit der den genauen physikalischen Sendezeitpunkt angebenden Sendzeitinformation AS in das Datenpaketnetz IPN zum Netzknoten B übertragen.

Alternativ dazu kann in das Datenpaket DP schon vor dem eigentlichen Sendevorgang eine vorgegebene Sendezeitinformation AS geladen werden. In diesem Fall wird das Senden des Datenpakets durch die Echtzeituhr RTCA physikalisch taktgenau zu dem durch die vorgegebene Sendezeitinformation AS angegebenen Zeitpunkt ausgelöst.

Das zum Netzknoten B übermittelte Datenpaket DP wird vom Sende/Empfangsbaustein HWB empfangen und dabei in ein Empfangsregister eingelesen. Bei Beginn des Empfangs wird durch den Sende/Empfangsbaustein HWB ein Empfangssignal ES generiert und zur Echtzeituhr RTCB übermittelt. Das Empfangssignal ES veranlaßt, daß der aktuelle Zeitwert von der Echtzeituhr RTCB abgerufen wird und als den genauen Empfangszeitpunkt des Datenpakets DP angebende Empfangszeitinformation BE zwischengespeichert wird. Nach dem Empfang des vollständigen Datenpakets DP wird eine darin enthaltende Zieladreßinformation (nicht dargestellt) durch den Netzknoten B ausgewertet, um das Datenpaket DP in Richtung seines Übertragungsziels C weiterzuleiten. Zur Auswertung der Zieladreßinformation wird in üblichen internetprotokollbasierten Datenpaketnetzen in der Regel eine sogenannte Routingtabelle nach zumindest teilweise übereinstimmenden Adreßinformationen durchsucht. Neben der Auswertung der Zieladreßinformation kann das Datenpaket oder dessen Nutzdateninhalt auch einer Protokollumsetzung oder einer anderweitigen Verarbeitung unterworfen werden. Die Adreßauswertung und gegebenenfalls die Verarbeitung des Datenpakets DP führt zu einer zeitlichen Verzögerung des Datenpaketes DP. Die jeweilige Dauer der Verzögerung ist dabei im allgemeinen nicht vorhersehbaren Schwankungen unterworfen, die durch unterschiedlich lange Adreßsuchzeiten, Programmunterbrechungen (Interrupts) und Wartezeiten bedingt ist.

Nach der Auswertung der Zieladreßinformation und gegebenenfalls einer weiteren Verarbeitung des Datenpaketes DP wird dieses in ein Senderegister des Sende/Empfangsbausteines HWB übertragen. Anschließend wird die zwischengespeicherte Empfangszeitinformation BE als zusätzliche Zeitinformation in das Datenpaket DP eingefügt. Mit dem Beginn des Weitersendens des Datenpaketes DP wird durch den Sende/Empfangsbaustein HWB ein Sendesignal SS generiert, durch das der gerade aktuelle Zeitwert der Echtzeituhr RTCB abgerufen wird und als zusätzliche Sendezeitinformation BS physikalisch taktgenau in das Datenpaket DP eingefügt wird. Somit wird das Datenpaket DP mit der Sendezeitinformation AS sowie mit den zusätzlichen Zeitinformationen BE und BS zur Kommunikationseinrichtung C übermittelt.

Die Hinzufügung der zusätzlichen Zeitinformationen BE und BS wird durch das Synchronisationsprotokoll STP gesteuert. Vorzugsweise kann das Synchronisationsprotokoll STP als Erweiterung des verbreiteten NTP-Protokolls ausgestaltet sein. Die zusätzlichen Zeitinformationen können dabei in einem erweiterten Zellkopf von NTP-Datenpaketen übermittelt werden. In ein Datenpaket eingefügte Sende- oder Empfangszeitinformationen werden häufig auch als Zeitstempel bezeichnet.

Sofern sich auf dem Leitweg zum Übermittlungsziel C noch weitere Netzknoten des Datenpaketnetzes IPN oder weitere Kommunikationsnetze befinden, sollte vorzugsweise jeder dieser weiteren Netzknoten eine den jeweiligen genauen Empfangszeitpunkt angebende Empfangszeitinformation sowie eine den jeweiligen genauen Weitersendezeitpunkt angebende Sendezeitinformation mit dem Datenpaket DP weiterleiten. Die Hinzufügung der zusätzlichen Zeitinformationen erhöht die erzielbare Synchronisationsgenauigkeit beträchtlich, da Schwankungen der netzknoteninternen Verarbeitungszeiten des Datenpakets DP anhand der zusätzlichen Zeitinformationen am Übermittlungsziel, hier C, rechnerisch eliminiert werden können.

Gleichwohl ist es nicht zwingend notwendig, daß alle Netzknoten auf dem Leitweg zwischen den Kommunikationseinrichtungen A und C zusätzliche Zeitinformationen zum Datenpaket DP hinzufügen. In solchen Fällen wird die erzielbare Synchronisationsgenauigkeit durch die Verarbeitungszeitschwankungen in denjenigen Netzknoten, die keine zusätzliche Zeitinformation hinzufügen, begrenzt. In der Regel kann jedoch auch in einem solchen Fall die Synchronisationsgenauigkeit gegenüber dem Stand der Technik deutlich erhöht werden, wenn zumindest in einer Kommunikationseinrichtung oder in einem Netzknoten das erfindungsgemäße Verfahren implementiert ist.

Im vorliegenden Ausführungsbeispiel wird das mit den Zeitinformationen AS, BE und BS versehene Datenpaket DP zur Kommunikationseinrichtung C übermittelt und von dessen Sende/Empfangseinrichtung HWC empfangen. Mit dem Beginn des Empfangsvorgangs generiert der Sende/Empfangsbaustein HWC ein Empfangssignal ES, durch das der aktuelle Zeitwert der Echtzeituhr RTCC als Empfangszeitinformation CE abgerufen wird.

Anhand der mit dem Datenpaket DP übermittelten Empfangszeitinformation BE und Sendezeitinformation BS kann durch die Kommunikationseinrichtung C die Verweilzeit des Datenpakets DP im Netzknoten B rechnerisch aus der Datenpaketlaufzeit eliminiert werden. Die entsprechende Rechenvorschrift CE - AS - (BS - BE) ergibt jedoch im allgemeinen nicht die genaue Laufzeit, da die Echtzeituhren RTCA und RTCC einen in der Regel geringen Zeitversatz (Offset) aufweisen. Darüber hinaus unterliegen die Echtzeituhren RTCA und RTCC aufgrund unvermeidlicher Taktfrequenzschwankungen im allgemeinen einer relativen Drift. Die angegebene Rechenvorschrift liefert also nur die um einen noch unbekannten Zeitversatzwert verfälschte Laufzeit.

Der Zeitversatzwert beziehungsweise die reine Datenpaketlaufzeit kann ermittelt werden, indem von der Kommunikationseinrichtung C ein weiteres Datenpaket (nicht dargestellt) mit einer weiteren Zeitinformation sowie mit den Zeitinformationen AS, BE, BS und CE über den Netzknoten B zur Kommunikationseinrichtung A zurück übermittelt wird. Anstelle der Zeitinformationen AS, BE, BS und CE kann dem weiteren Datenpaket auch der in der Kommunikationseinrichtung C ermittelte vorläufige Laufzeitwert hinzugefügt werden.

Analog zum oben beschriebenen Verfahren werden dem weiteren Datenpaket durch den Netzknoten B weitere Sende- und Empfangszeitinformationen hinzugefügt. Ferner wird der genaue Empfangszeitpunkt des weiteren Datenpaketes durch die Kommunikationseinrichtung A erfaßt. In der Kommunikationseinrichtung A kann anschließend - analog zu den obigen Ausführungen - ein um den Zeitversatz der Echtzeituhren RTCA und RTCC verfälschter Wert für die reine Laufzeit des weiteren Datenpaketes ermittelt werden. Da der Zeitversatz in die Laufzeit des weiteren Datenpakets jedoch mit anderem Vorzeichen als in die Laufzeit des Datenpakets DP eingeht, kann der Zeitversatz durch Summieren dieser beiden Laufzeiten eliminiert werden. Unter der Annahme, daß die Laufzeiten des Datenpakets DP und des in umgekehrter Richtung übermittelten, weiteren Datenpakets in etwa übereinstimmen, kann der relative Zeitversatz zwischen den Echtzeituhren RTCA und RTCC mit hoher Genauigkeit berechnet werden. Um den Einfluß einer relativen Drift der Echtzeituhren RTCA und RTCC zwischen der Übermittlung des Datenpaketes DP und des weiteren Datenpaketes zu minimieren, sollte das weitere Datenpaket möglichst kurz nach Empfang des Datenpaketes DP übermittelt werden.

Unter der Annahme, daß bei der Datenpaketübertragung zwischen den Kommunikationseinrichtungen A, C und dem Netzknoten B nur die reinen Kabellaufzeiten zu berücksichtigen sind, kann der Zeitversatz zwischen den Echtzeituhren RTCA und RTCC auch ohne die Rücksendung des weiteren Datenpaketes mit hinreichender Genauigkeit bestimmt werden. Die reinen Kabellaufzeiten sind in vielen Fällen vernachlässigbar.

Die relative Drift zwischen den Echtzeituhren RTCA und RTCC kann gemessen werden, indem wiederholt Datenpakete mit Zeitinformationen gemäß den obigen Ausführungen zwischen den Kommunikationseinrichtungen A und C übermittelt werden und die erhaltenen Zeitwerte kombiniert werden.

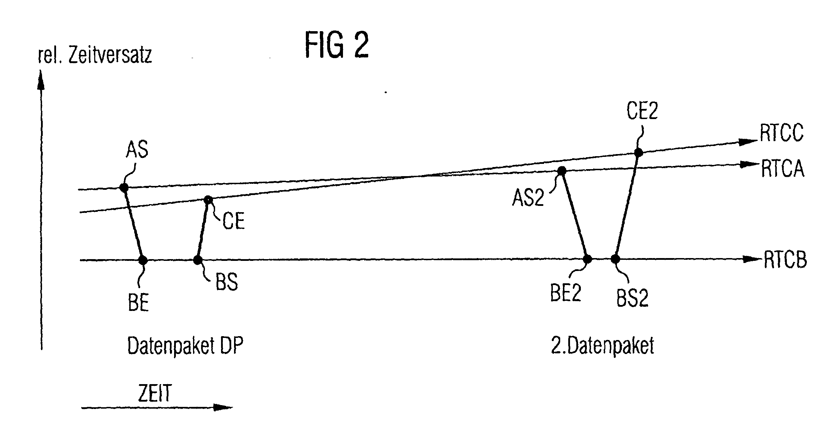

Fig 2 zeigt ein Zeitablaufdiagramm einer solchen Driftmessung in schematischer Darstellung. In dem Zeitablaufdiagramm sind die relativen Zeitabweichungen der Echtzeituhren RTCA, RTCB und RTCC durch den Echtzeituhren zugeordnete Pfeile im zeitlichen Verlauf dargestellt.

Im linken Teil von Fig 2 wird die Übermittlung des Datenpakets DP veranschaulicht: Das Datenpaket DP wird von der Kommunikationseinrichtung A zu einem Zeitpunkt, zu dem die Echtzeituhr RTCA den Zeitwert AS anzeigt, mit dieser Zeitinformation AS zum Netzknoten B übermittelt. Zum Empfangszeitpunkt zeigt die Echtzeituhr RTCB des Netzknotens B den Zeitwert BE an. Nach einer nicht näher bekannten Verarbeitungszeit wird das Datenpaket DP zu einem Zeitpunkt, zu dem die Echtzeituhr RTCB den Zeitwert BS anzeigt, zur Kommunikationseinrichtung C weitergesendet. Bei Eintreffen des Datenpaketes DP zeigt die Echtzeituhr RTCC der Kommuinkationseinrichtung C den Zeitwert CE an.

Nach einer vorgegebenen Zeitspanne wird ein zweites Datenpaket von der Kommunikationseinrichtung A über den Netzknoten B zur Kommunikationseinrichtung C auf die gleiche Weise wie das Datenpaket DP übermittelt. Die Zeitspanne sollte einerseits groß genug sein, um die relative Drift der Echtzeituhren RTCA und RTCC noch mit ausreichender Genauigkeit erfassen zu können, andererseits aber noch nicht so groß sein, daß der driftbedingte Zeitversatz eine geforderte Synchronitätstoleranz überschreitet.

Das zweite Datenpaket wird mit einer zum Sendezeitpunkt eingefügten Sendezeitinformation AS2 von der Kommunikationseinrichtung A zum Netzknoten B übermittelt. Dort wird eine den Empfangszeitpunkt angebende Empfangszeitinformation BE2 von der Echtzeituhr RTCB abgerufen und zusammen mit einer den Weitersendezeitpunkt angebenden Sendezeitinformation BS2 dem zweiten Datenpaket hinzugefügt und zur Kommunikationseinrichtung C übermittelt. In der Kommunikationseinrichtung C wird schließlich bei Empfang des zweiten Datenpakets eine Empfangszeitinformation CE2 von der Echtzeituhr RTCC abgerufen.

Aus den im Zusammenhang mit dem Datenpaket DP und dem zweiten Datenpaket übermittelten beziehungsweise ermittelten Zeitinformationen AS, BE, BS, CE, AS2, BE2, BS2 und CE2 kann durch die Kommunikationseinrichtung C ein verhältnismäßig genauer Wert für die relative Drift der Echtzeituhren RTCA und RTCC ermittelt werden. Die Genauigkeit ist um so größer, je geringer die Schwankungen der reinen Datenpaketlaufzeit zwischen den Kommunikationseinrichtungen A, C und dem Netzknoten B sind. Falls zwischen dem Netzknoten B und den Kommunikationseinrichtungen A und C direkte Kabelverbindungen bestehen, sind die Schwankungen der Datenpaketlaufzeit - und häufig auch die Datenpaketlaufzeiten selbst - für Synchronisationszwecke vernachlässigbar. Die Schwankungen der Paketverzögerungen im Netzknoten B können anhand der übermittelten Sende- und Empfangszeitinformationen BE, BS beziehungsweise BE2, BS2 eliminiert werden. D.h. es kann angenommen werden, daß die tatsächliche physikalische Zeitspanne zwischen AS und BE gleich der physikalischen Zeitspanne zwischen AS2 und BE2 und die physikalische Zeitspanne zwischen BS und CE gleich der physikalischen Zeitspanne zwischen BS2 und CE2 ist. Unterscheidet sich die Differenz BE - AS von BE2 - AS2 oder die Differenz CE - BS von CE2 - BS2, so ist dies auf die relative Drift der Echtzeituhren RTCA, RTCB und RTCC zurückzuführen. Somit ergibt sich aus der Rechenvorschrift (BE2 - AS2 + CE2 - BS2) - (BE - AS + CE - BS) ein Wert für die relative Drift der Echtzeituhr RTCC gegenüber der Echtzeituhr RTCA innerhalb der Zeitspanne zwischen der Übermittlung der beiden Datenpakete.

Anhand des ermittelten Driftwertes kann die Echtzeituhr RTCC nachjustiert werden und so mit der Echtzeituhr RTCA synchronisiert werden. Der ermittelte Driftwert kann auch dazu verwendet werden die Frequenz eines Taktgenerators der Echtzeituhr RTCC oder der Kommunikationseinrichtung C nachzuregeln, um diesen mit einem Taktgenerator der Kommunikationseinrich-. tung A zu synchronisieren. Um eine anhaltende Synchronität zu gewährleisten sind Zeitinformationen enthaltende Datenpakete vorzugsweise in regelmäßigen Zeitabständen zwischen den zu synchronisierenden Kommunikationseinrichtungen, hier A und C, zu übermitteln.

## Patentansprüche

1. Verfahren zum Übermitteln von Zeitinformation über ein Datenpaketnetz (IPN), bei dem
eine von einer Zeitinformationsquelle (RTCA, RTCB) abgerufene Zeitinformation (AS, BS) zu einem Datenpaket-Sendebaustein (HWA, HWB) übertragen wird, durch den ein Sendezeitpunkt eines Datenpakets (DP) kontrolliert wird,
**dadurch gekennzeichnet,**
**dass** die abgerufene Zeitinformation (AS, BS) in dem Datenpaket über das Datenpaketnetz (IPN) übermittelt wird, wobei der Sendezeitpunkt und der Abruf der Zeitinformation (AS, BS) durch ein von der Zeitinformationsquelle (RTCA, RTCB) oder dem Datenpaket-Sendebaustein (HWA, HWB) generiertes, den Sendezeitpunkt angebendes Sendesignal (SS) aktiv zeitlich aneinander ausgerichtet werden.

2. Verfahren nach Anspruch 1,
**dadurch gekennzeichnet,**
**dass** der Datenpaket-Sendebaustein (HWA, HWB) das Sendesignal (SS) im Rahmen des Sendevorgangs generiert und durch das generierte Sendesignal (SS) der Abruf der Zeitinformation (AS, BS) ausgelöst wird.

3. Verfahren nach Anspruch 1,
**dadurch gekennzeichnet,**
**dass** die Zeitinformationsquelle (RTCA, RTCB) das Sendesignal (SS) zu einem vorgegebenen Zeitpunkt generiert und durch das generierte Sendesignal (SS) das Senden des Datenpakets (DP) ausgelöst wird.

4. Verfahren nach einem der vorhergehenden Ansprüche,
**dadurch gekennzeichnet,**
**dass** das Datenpaket (DP) gemäß einem Übertragungsprotokoll der TCP/IP-Protokollfamilie übertragen wird.

5. Verfahren nach einem der vorhergehenden Ansprüche,
**dadurch gekennzeichnet,**
**dass** bei einem Empfang des über das Datenpaketnetz (IPN) übermittelten Datenpakets (DP) durch einen Datenpaket-Empfangsbaustein (HWB, HWC) ein Empfangssignal (ES) generiert wird, durch das ein Abruf einer Empfangszeitinformation (BE, CE) von einer weiteren Zeitinformationsquelle (RTCB, RTCC) veranlasst wird.

6. Verfahren nach Anspruch 5,
**dadurch gekennzeichnet,**
**dass** anhand der übermittelten Zeitinformation (AS, BS) und der Empfangszeitinformation (BE, CE) eine relative Abweichung der Zeitinformationsquellen (RTCA, RTCB, RTCC) ermittelt wird.

7. Verfahren nach Anspruch 5 oder 6,
**dadurch gekennzeichnet,**
**dass** ein das Datenpaket (DP) weiterleitender Netzknoten (B) des Datenpaketnetzes (IPN) die bei Empfang des Datenpakets abgerufene Empfangszeitinformation (BE) sowie eine einen Weitersendezeitpunkt angebende Sendezeitinformation (BS) mit dem Datenpaket (DP) weiterleitet.

8. Verfahren nach Anspruch 7,
**dadurch gekennzeichnet,**
**dass** bei Empfang des weitergeleiteten Datenpakets (DP) eine weitere Empfangszeitinformation (CE) abgerufen wird und anhand der übermittelten Zeitinformation (AS), der übermittelten Empfangszeitinformation (BE), der übermittelten Sendezeitinformation (BS) sowie der weiteren Empfangszeitinformation (CE) eine relative Abweichung von Zeitinformationsquellen (RTCA, RTCC) ermittelt wird.

9. Verfahren nach einem der vorhergehenden Ansprüche,
**dadurch gekennzeichnet,**
**dass** das Sendesignal (SS) und/oder das Empfangssignal (ES) durch Hardwarekomponenten generiert und/oder ausgewertet wird.

10. Verfahren nach einem der vorhergehenden Ansprüche,
**dadurch gekennzeichnet,**
**dass** das Sendesignal (SS) und/oder das Empfangssignal (ES) auf der physikalischen Schicht des OSI-Referenzmodells generiert und/oder ausgewertet wird.

## Claims

1. Method for transmitting time information via a data packet network (IPN), in which
time information (AS, BS) which is called up from a time information source (RTCA, RTCB) is transmitted to a data packet transmission module (HWA, HWB) which controls a transmission time for a data packet (DP), **characterized in that** the time information (AS, BS) in the data packet which has been called is transmitted via the data packet network (IPN), with the transmission time and the calling of the time information (AS, BS) being actively aligned with respect to one another in time by means of a transmission signal (SS) which is generated by the time information source (RTCA, RTCB) or by the data packet transmission module (HWA, HWB) and indicates the transmission time.

2. Method according to Claim 1,
**characterized in that**
the data packet transmission module (HWA, HWB) generates the transmission signal (SS) in the course of the transmission process, and the generated transmission signal (SS) initiates the calling of the time information (AS, BS).

3. Method according to Claim 1,
**characterized in that**
the time information source (RTCA, RTCB) generates the transmission signal (SS) at a predetermined time, and the transmission of the data packet (DP) is initiated by the generated transmission signal (SS).

4. Method according to one of the preceding claims,
**characterized in that**
the data packet (DP) is transmitted using a transmission protocol in the TCP/IP protocol family.

5. Method according to one of the preceding claims,
**characterized in that**,
when a data packet receiving module (HWB, HWC) receives the data packet (DP) transmitted via the data packet network (IPN), a reception signal (ES) is generated which initiates a call for reception time information (BE, CE) from a further time information source (RTCB, RTCC).

6. Method according to Claim 5,
**characterized in that**
any relative discrepancy between the time information sources (RTCA, RTCB, RTCC) is determined on the basis of the transmitted time information (AS, BS) and the reception time information (BE, CE).

7. Method according to Claim 5 or 6,
**characterized in that**
a network (B) which passes on the data packet (DP) in the data packet network (IPN) passes on the reception time information (BE), which is called on reception of the data packet, and transmission time information (BS), which indicates the time at which it was passed on, with the data packet (DP).

8. Method according to Claim 7,
**characterized in that**,
on receiving the data packet (DP) which is being passed on, further reception time information (CE) is called and any relative discrepancy between the time information sources (RTCA, RTCC) is determined on the basis of the transmitted time information (AS), the transmitted reception time information (BE), the transmitted transmission time information (BS), and the further reception time information (CE).

9. Method according to one of the preceding claims,
**characterized in that**
the transmission signal (SS) and/or the received signal (ES) are/is generated and/or evaluated by hardware components.

10. Method according to one of the preceding claims,
**characterized in that**
the transmission signal (SS) and/or the received signal (ES) are/is generated and/or evaluated in the physical layer of the OSI reference model.

## Revendications

1. Procédé de transmission d'informations temporelles par le biais d'un réseau de données par paquets (IPN), dans lequel
une information temporelle (AS, BS) appelée par une source d'informations temporelles (RTCA, RTCB) est transmise à un module d'émission de données en paquets (HWA, HWB) grâce auquel l'instant d'émission d'un paquet de données (DP) est contrôlé,
**caractérisé en ce que**
l'information temporelle appelée (AS, BS) est transmise dans le paquet de données par le biais du réseau de données par paquets (IPN), l'instant d'émission et l'appel de l'information temporelle (AS, BS) étant alignés l'un sur l'autre dans le temps de manière active grâce à un signal d'émission (SS) généré par la source d'informations temporelles (RTCA, RTCB) ou par le module d'émission de données en paquets (HWA, HWB) et indiquant l'instant d'émission.

2. Procédé selon la revendication 1,
**caractérisé en ce que**
le module d'émission de données en paquets (HWA, HWB) génère le signal d'émission (SS) dans le cadre du processus d'émission et l'appel de l'information temporelle (AS, BS) est déclenché par le signal d'émission (SS) généré.

3. Procédé selon la revendication 1,
**caractérisé en ce que**
la source d'informations temporelles (RTCA, RTCB) génère le signal d'émission (SS) à un instant prédéfini et le signal d'émission (SS) généré déclenche l'émission du paquet de données (DP).

4. Procédé selon l'une des revendications précédentes,
**caractérisé en ce que**
le paquet de données (DP) est transmis selon un protocole de transmission de la famille des protocoles TCP/IP.

5. Procédé selon l'une des revendications précédentes,
**caractérisé en ce**
**qu'**un signal de réception (ES) est généré lors de la réception par un module de réception de données en paquets (HWB, HWC) du paquet de données (DP) transmis par le biais du réseau de données par paquets (IPN), lequel signal déclenche un appel d'une information temporelle de réception (BE, CE) d'une autre source d'informations temporelles (RTCB, RTCC).

6. Procédé selon la revendication 5,
**caractérisé en ce**
**qu'**un écart relatif entre les sources d'informations temporelles (RTCA, RTCB, RTCC) est déterminé à l'aide de l'information temporelle (AS, BS) transmise et de l'information temporelle de réception (BE, CE).

7. Procédé selon la revendication 5 ou 6,
**caractérisé en ce**
**qu'**un noeud de réseau (B) du réseau de données par paquets (IPN) acheminant le paquet de données (DP) achemine avec ce dernier paquet de données (DP) l'information temporelle de réception (BE) appelée lors de la réception du paquet de données ainsi qu'une information temporelle d'émission (BS) indiquant un instant de réémission.

8. Procédé selon la revendication 7,
**caractérisé en ce**
**qu'**une information temporelle de réception (CE) supplémentaire est appelée lors de la réception du paquet de données (DP) acheminé et un écart relatif entre les sources d'informations temporelles (RTCA, RTCC) est déterminé à l'aide de l'information temporelle transmise (AS), de l'information temporelle de réception transmise (BE), de l'information temporelle d'émission transmise (BS) et de l'information temporelle de réception (CE) supplémentaire.

9. Procédé selon l'une des revendications précédentes,
**caractérisé en ce que**
le signal d'émission (SS) et/ou le signal de réception (ES) est/sont généré/s et/ou analysé/s par des composants de matériel.

10. Procédé selon l'une des revendications précédentes,
**caractérisé en ce que**
le signal d'émission (SS) et/ou le signal de réception (ES) est/sont généré/s et/ou analysé/s sur la couche physique du modèle de référence OSI.
